Europäisches Patentamt

European Patent Office

Office européen des brevets

(11) Publication number: **0 350 241**
**A2**

# EUROPEAN PATENT APPLICATION

(21) Application number: 89306739.7

(22) Date of filing: 03.07.89

(51) Int. Cl.⁴: **H01F 1/00**

(30) Priority: 05.07.88 JP 168441/88

(43) Date of publication of application:
**10.01.90 Bulletin 90/02**

(84) Designated Contracting States:
**DE FR GB**

(71) Applicant: SEIKO INSTRUMENTS INC.
31-1, Kameido 6-chome Koto-ku
Tokyo 136(JP)

(72) Inventor: Sakuhara, Toshihiko
c/o SEIKO INSTRUMENTS INC. 31-1 Kameido
6-chome
Koto-ku Tokyo(JP)
Inventor: Date, Muneyuki
7-16-813 Uenonishi 4-chome
Toyonaka-shi Osaka(JP)

(74) Representative: Caro, William Egerton et al
J. MILLER & CO. Lincoln House 296-302 High
Holborn
London WC1V 7JH(GB)

(54) Method of producing material having an anisotropic microstructure.

(57) A method of producing material having an an-isotropic micro-structure comprising the steps of magnetically coupling diamagnetic compounds having magnetically anisotropic axes to each other by aligning their axes thereby to grow particles having a size exceeding a specific critical magnetic capacity, and applying a magnetic field to the particles to orient them and immobilising the thus oriented particles.

EP 0 350 241 A2

## METHOD OF PRODUCING MATERIAL HAVING AN ANISOTROPIC MICRO-STRUCTURE

This invention relates to methods of producing material having anisotropic or uni-axial micro-structure, and more specifically, although not so restricted, relates to methods of aligning organic particles or polymer particles having benzene ring structure, acid amide groups, etc. in high order so as to produce a new material generally useful as a structural or functional material.

There are various types of materials having anisotropic structure such as polymer films and fibrous materials. These anisotropic materials are conventionally produced by various methods including typically, super drawing, solid extrusion, zonal drawing, dielectric heating drawing, fibrous crystal growing, gel fibre super drawing, single crystal mat super drawing, flow drawing, liquid crystal spinning and so on. These conventional methods are all based on mechanical processess such as extrusion and drawing.

On the other hand, there are other methods of magnetically orienting or aligning ferro-magnetic particles or ferri-magnetic particles. One typical method in practical use involves magnetically orienting ferrite particles to produce recording media such as magnetic tape. However, it is difficult magnetically to orient some types of organic or polymer compounds having diamagnetic frame groups such as benzene rings and peptide-bonding groups.

The present invention seeks to provide a method of providing material having an anisotropic micro-structure of the type which is difficult to orientate magnetically by known methods.

According to the present invention, there is provided a method of producing material having an anisotropic micro-structure characterised by comprising the steps of: magnetically coupling diamagnetic compounds having magnetically anisotropic axes to each other by aligning their axes thereby to grow particles having a size exceeding a specific critical magnetic capacity; and applying a magnetic field to the particles to orient them and immobilise the thus oriented particles.

Preferably each particle has its specific critical magnetic capacity defined in terms of its volume containing n constituent compounds coupled to each other so as to satisfy the relation:

$$(n. \Delta \chi .B^2)/2 = kT$$

where $\Delta \chi$ is the anisotropic magnetic susceptibility of the constituent compounds, B is the magnitude of the applied magnetic field, $k$ is Boltzmann's constant, and T is temperature.

The invention is illustrated, merely by way of example, in the accompanying drawings, in which:-

Figure 1 is a graph showing basic data of critical magnetic capacity;

Figure 2 is a diagram showing the relationship between change of degree of magnetic orientation and ratio of magnetic anisotropy energy to thermal energy;

Figure 3 is a schematic diagram showing a limited dissociation process of fibrinogen by thrombin and polymerisation process of fibrin;

Figure 4 is a schematic block diagram showing apparatus for carrying out a method according to the present invention;

Figure 5 is a graph showing change in light transmitivity and degree of polarisation during the course of polymeric reaction of fibrin; and

Figure 6A and 6B are schematic diagrams showing micro-structures of fibrin fibrous material grown without and with application of a magnetic field, respectively.

In the present invention, the concept of "critical magnetic capacity" is introduced and defined with respect to a diamagnetic compound which has relatively weak magnetic properties and therefore would not be magnetically orientated using prior art technology. In the present invention, a diamagnetic compound is coupled to form particles having a size exceeding the critical magnetic capacity, and then the particles are magnetically oriented. By this two-stage process, the diamagnetic compound can be magnetically oriented to produce highly oriented organic or polymer materials.

The critical magnetic capacity defined with respect to a diamagnetic compound including, for example, benzene ring groups will be described hereinafter. A benzene ring can easily conduct electric current along its ring structure. Therefore, when an external magnetic field is applied normal to the plane of the benzene ring, a relatively large diamagnetism is induced in the benzene ring. Since the diamagnetism produces magnetic poles opposite to the externally applied magnetic field, the induced diamagnetism is energetically unstable. Therefore, in order to avoid generation of unstable diamagnetism, the molecules of the benzene ring undergo rotation to orient the plane of the benzene ring parallel to the external magnetic field. This is called magnetic orientation due to diamagnetism. However, anisotropic energy is very small in the magnetic orientation of the benzene ring. In general, the anisotropic energy is represented by $(\Delta \chi .B^2)/2$ where $\Delta \chi$ is anisotropic magnetic susceptibility and B is magnetic field. Unless this anisotropic energy exceeds the thermal energy kT (where $k$ is Boltzmann's constant and T is temperature), the magnetic orientation rarely occurs. For example, the separate benzene ring molecule will undergo magnetic orientation at the rate of $10^{-6}$ even under a magnetic field of 10 tesla. Namely, only one benzene molecule out of one million undergoes magnetic orientation. In view of this, diamagnetic molecules are polymerised or associated with one another with alignment in one direction to grow particles of desired size. If n represents the number of anisotropic and diamagnetic molecules or segments bonded to constitute a particle, the anisotropic energy of the particle is multiplied by n and represented by $(n. \Delta\chi .B^2)/2$. On the other hand, the thermal energy of the particle is still kT with respect to the degree of freedom of the particle orientation regardless of the internal energy of the n segments. When this anisotropic energy exceeds the thermal energy by appropriately setting the values of n and B, the magnetic orientation of the particle can be effected. Thus, the critical magnetic capacity is defined by the volume of a particle which contains n constituent molecules or segments to satisfy the relation: $(n. \Delta\chi .B^2)/2 = kT$. If B represent the magnitude of the magnetic field, any mass group containing n molecules satisfy the relation $(n. \Delta\chi .B^2)/2 \geq kT$.

can undergo the magnetic orientation. For example, a mass group containing more or less than $10^6$ benzene ring molecules of the anisotropic and diamagnetic type can undergo magnetic orientation in a magnetic field of 8 tesla.

According to the present invention, based on the above described theoretical background of the new concept of critical magnetic capacity, diamagnetic organic or polymer compounds are bonded or associated to each other so as to grow a mass group having a size exceeding the critical magnetic capacity, and then a magnetic field is applied to cause orientation so as to produce a final material of the diamagentic type under magnetic orientation.

EXAMPLE 1

In this Example, the critical magnetic capacity is explained in detail, based on data obtained with respect to graphite particles. The graphite particles used were prepared with a single crystal structure in which various numbers of hexagonal plates of the lattice structure of graphite are coupled to each other with alignment in the direction of the hexagonal plates. An experiment was carried out to determine the critical magnetic capacity of the graphite particles with change in the magnitude of an external magnetic field.

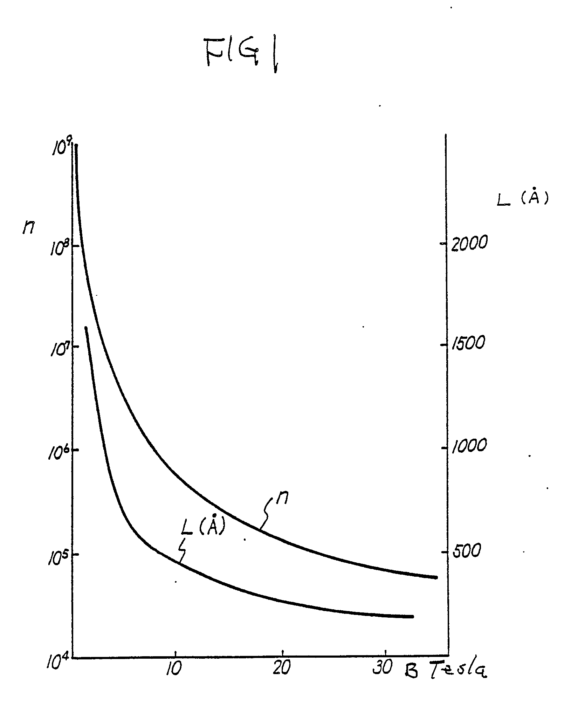

Figure 1 shows the result of the experiment in which the critical magnetic capacity of graphite particles is represented in the terms of number n of hexagonal plate segments and in terms of size L (Angstroms) of graphite particles for various magnitudes of external magnetic field. The curves of Figure 1 are plotted through points at which the anisotropic energy is equal to the thermal energy for various magnitudes of external magnetic field. The magnetic orientation can be observed in the region on and above these curves of Figure 1.

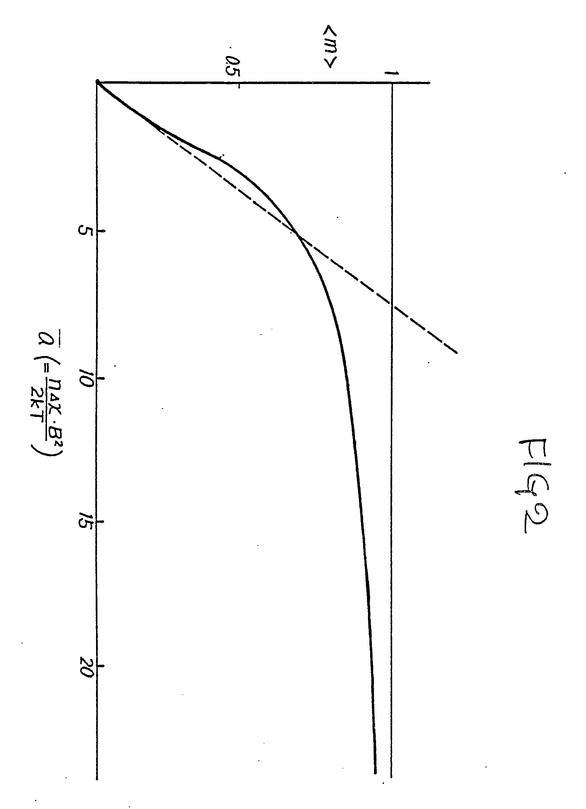

Figure 2 is a diagram showing actual degree of orientation when a diamagnetic graphite particle is subjected to an external magnetic field, in which the ordinate indicates a ratio

$$\bar{a} \quad (= \frac{n. \Delta\chi .B^2}{2kT})$$

of the anisotropic energy to the thermal energy and the abscissa indicates the degree of orientation <m>. When the anisotropic energy is equal to the thermal energy, i.e. $\bar{a} = 1$, the degree of orientation <m> is about 0.15 such that 15% of the graphite particles having n hexagonal plate segments are actually magnetically oriented. When linearly approximating the curve of Figure 2 in the lower magnetic field range, an approximate linear relation

$$<m> = \frac{2}{15} \bar{a}$$

is obtained. When $\bar{a} = 7.5$, <m> = 0.8, i.e. 80% orientation can be obtained.

EXAMPLE 2

In this Example, fibrin molecules were coupled to each other so as to produce an anisotropic micro-structure material due to magnetic orientation.

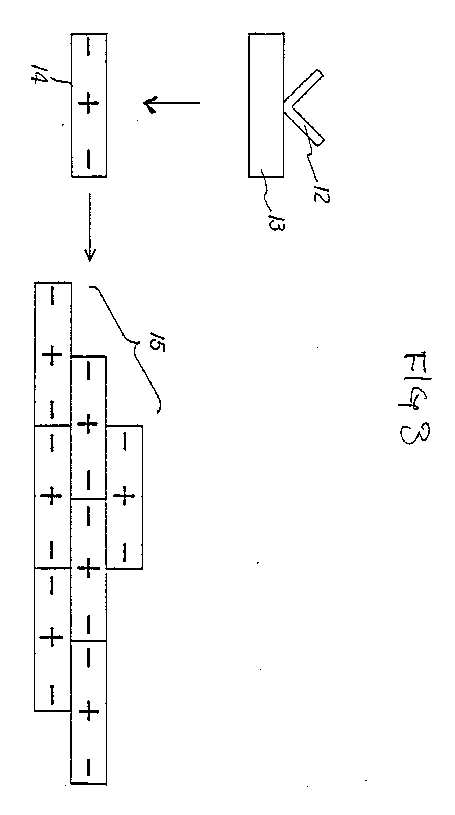

Figure 3 is a schematic diagram showing the limited dissociation process of fibrinogen by thrombin and polymerisation process of fibrin. Fibrinogen indicated by reference numeral 13 is known as a primary factor of blood coagulation. Fibrinogen is an elongate molecule having a long axis of 450 Angstroms and a short axis of 90 Angstroms and is composed of a protein of about 340,000 molecular weight. The fibrinogen 13 is subjected to limited dissociation with the aid of thrombin 12 to produce fibrin molecules 14. Each fibrin molecule 14 has localised electric charge within the molecule, so that each fibrin molecule 14 is coupled to others by electro-static inter-action to constitute a fibrous particle of a fibrin fibre 15 in which fibrin molecule segments are aligned in the direction of their long axis direction in the form of a ladder. The polymerisation of fibrin is carried out under the application of an external magnetic field.

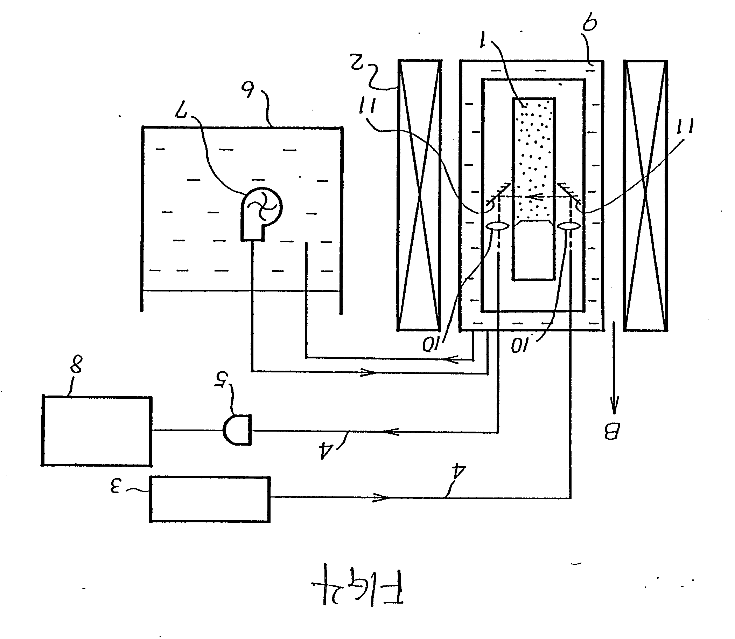

Figure 4 shows an experimental apparatus for carrying out the polymerisation of fibrin in a magnetic field. A sample solution 1 was prepared containing aqueous solution of 1.5 to 2.2 x $10^5$ M fibrinogen (pH = 7.4, tris HCl 0.05M, NaCl 0.03M), and was loaded in the experimental apparatus. Thrombin was added to the sample solution 1 at a concentration of 0.01 u/ml to convert fibrinogen to fibrin. Then under a moderate reactive condition where the aqueous solution of fibrin gelates for one to two hours, a magnetic field of 8 tesla was applied to the aqueous solution by means of a super conducting magnet 2 in the direction indicated by arrow B during the synthesis of fibrous particles or fibres. For comparison, the synthesis of fibres was also conducted without the application of a magnetic field. During the synthesis, the container of the sample solution 1 was disposed within a sample bath 9 connected to a thermal bath 6 containing a pump 7 to circulate thermal medium through the sample bath 9.

The rate of fibre production was optically monitored by means of a laser source 3, optical fibres 4, collecting lenses 10, mirrors 11, a photo detector 5 and a de-coder 8. The laser beam from the laser source 3 was transmitted through the sample solution 1, and detected by the photo detector 5 to analyse change of light transmitivity of the solution due to the production of fibres in the solution and to analyse the degree of polarisation of the transmitted laser beam to measure the degree of orientation of the produced fibres or fibrous particles.

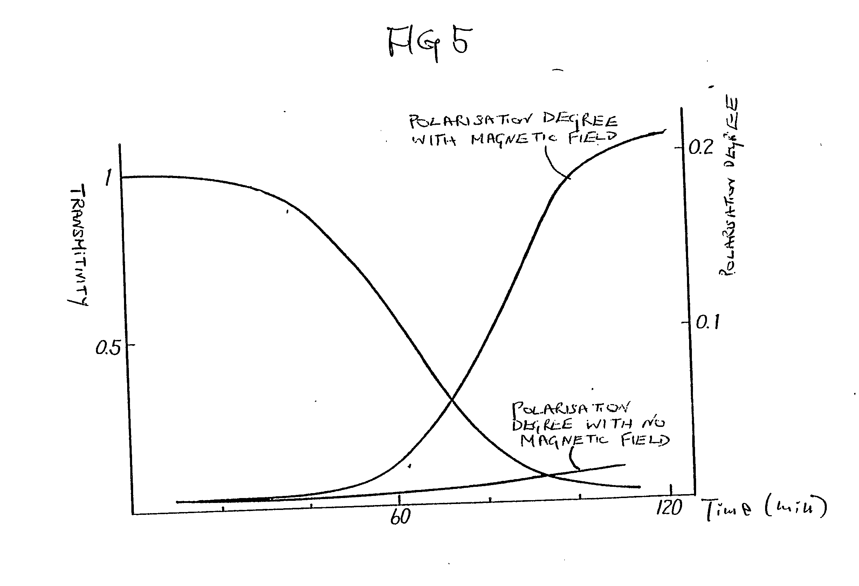

Figure 5 shows the result of measurement. During the course of the reaction in the sample solution, the intensity of the transmitted laser beam reduces to half of the initial intensity within about one hours and thereafter approaches zero level in either the presence or absence of the magnetic field. On the other hand, the degree of polarisation of the transmitted laser beam increases in the presence of the magnetic field due to the magnetic orientation of the fibres, while the degree of polarisation of the transmitted laser beam does not change substantially in the absence of the magnetic field.

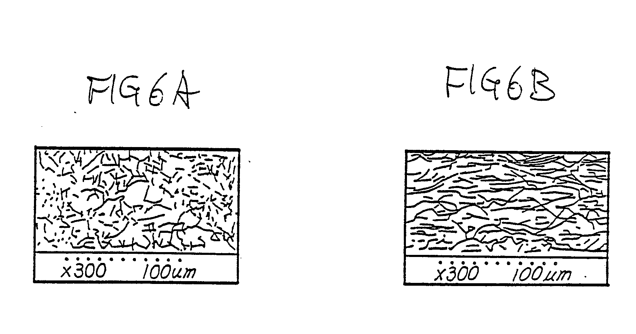

The fibrin fibres so produced were immobilised with flutaric aldehyde and dehydrated by alcohol to make speciments of fibrous material for inspection by a scanning type electron-microscope. Figures 6A and 6B are schematic diagrams showing fibre arrangement of the fibrous material according to electron-microscope photographs of the specimens. Figure 6A illustrates micro-structure of the fibrous material produced in the absence of a magnetic field, and Figure 6B illustrates the microstructure of the fibrous material produced in the presence of a magnetic field having a magnitude of 8 tesla. As shown, the fibrin fibres are randomly disposed in the absence of a magnetic field, while the fibrin fibres are definitely oriented in the direction of the magnetic field thereby to constitute a fibrous anisotropic network structure in the case of the presence of a magnetic field of 8 tesla. In these cases, the orientation of the fibres was disturbed in the making of the specimens for the electron-microscope. Therefore, the fibres are supposed to be oriented to a higher order prior to the dehydoration process.

Next, using the same experimental apparatus, firstly a given size of fibrin fibres were prepared, and then the magnetic field was applied to check whether the orientation was caused or not, depending on the magnitude of the magnetic field. Namely, to the sample solution as in Example 2, was added thrombin and reacted for sixty five minutes. During this period of reaction, fibrin fibres were formed so that the resuling fibrin fibres contained n = 1.4 x $10^6$ diamagnetic segments in terms of the benzene ring. This size of fibrin fibres did not exhibit orientation in a magnetic field of 1 tesla. Further, this size of fibrin fibres exhibited partial orientation at the rate of about 20% to enable magnetic alignment in a magnetic field of 8 tesla. Moreover, when the magnetic field was doubled to 16 tesla, this size of fibrin fibres exhibited orientation at the rate of about 70% sufficient to enable the production of fibrous material having an anisotropic micro-structure. This size of fibrin fibres needed about 7 tesla of the magnetic field so as to reach the critical magnetic capacity. This meant that the data of critical magnetic capacity of Figure 1 was proved correct.

As described above, according to the present invention, diamagnetic compounds which would be difficult to align magnetically with prior art technology, can be magnetically oriented thereby to enable the production of material having a high order anisotropic micro-structure. Since such material has an anisotropic micro-structure, it can be used as a structural material having improved mechanical strength and as a functional material utilising its high order alignment in the chemical and electronic industries, thereby providing great industrial merit.

## Claims

1. A method of producing material having an anisotropic micro-structure characterised by comprising the steps of: magnetically coupling diamagnetic compounds having magnetically anisotropic axes to each other by aligning their axes thereby to grow particles having a size exceeding a specific critical magnetic capacity; and applying a magnetic field to the particles to orient them and immobilise the thus oriented particles.

2. A method as claimed in claim 1 characterised in that each particle has its specific critical magnetic capacity defined in terms of its volume containing $n$ constituent compounds coupled to each other so as to satisfy the relation: $(n. \Delta\chi .B^2)/2 = kT$

where $\Delta\chi$ is the anisotropic magnetic susceptibility of the constituent compounds, B is the magnitude of the applied magnetic field, $k$ is Boltzmann's constant, and T is temperature.

FIG 1

FIG 2

$\langle m \rangle$

1

0.5

5　　10　　15　　20

$\overline{a} \left( = \dfrac{n \Delta \chi \cdot B^2}{2kT} \right)$

FIG 3

FIG 6A

FIG 6B

x300 100μm

x300 100μm